# EUROPEAN PATENT SPECIFICATION

(11) **EP 3 061 345 B1**
(45) Date of publication and mention of the grant of the patent: **09.05.2018**
(21) Application number: 16151569.7
(22) Date of filing: 15.01.2016
(51) Int. Cl.: A01N 25/00, A01N 43/22, A01P 19/00, A01N 31/02, A01N 35/02, A01N 37/02

(54) **SEX PHEROMONE DERIVATIVES, AND METHODS AND USES THEREOF**
SEXUALPHEROMONDERIVATE UND VERFAHREN UND VERWENDUNGEN DAVON
DÉRIVÉS DE PHÉROMONE SEXUELLE, PROCÉDÉS ET UTILISATIONS DE CEUX-CI

(30) Priority: 16.01.2015 US 201562104649 P; 16.01.2015 CA 2878555
(43) Date of publication of application: 31.08.2016
(73) Proprietor: Her Majesty the Queen in Right of Canada, as represented by the Minister of Natural Resources Canada, Ottawa, Ontario K1A 0E4 (CA)
(72) Inventor: SILK, Peter, New Brunswick E3B 7Z4 (CA); RYALL, Krista, Sault Ste. Marie, Ontario P6A 2E5 (CA); MAYO, Peter, New Brunswick E6C IK5 (CA); MAGEE, David, Gagetown, New Brunswick E5M 1L6 (CA)
(74) Representative: Bryers LLP

(56) References cited:
- CA-A1- 2 102 946
- US-A- 4 560 551
- US-A1- 2013 028 858
- SILK P J ET AL: "A Biologically Active Analog of the Sex Pheromone of the Emerald Ash Borer,Agrilus planipennis", JOURNAL OF CHEMICAL ECOLOGY, SPRINGER, NL, vol. 41, no. 3, 20 March 2015 (2015-03-20) , pages 294-302, XP035492595, ISSN: 0098-0331, DOI: 10.1007/S10886-015-0562-1 [retrieved on 2015-03-20]
- FRANICH ET AL: "Macrocyclic lactones in radiata pine forest floor litter", PHYTOCHEMISTRY, PERGAMON PRESS, GB, vol. 31, no. 7, 1 July 1992 (1992-07-01), pages 2532-2533, XP027364992, ISSN: 0031-9422 [retrieved on 1992-07-01]
- ATSUSHI USAMI ET AL: "Characteristic Odorants from Bailingu Oyster Mushroom (Pleurotus eryngii var. tuoliensis) and Summer Oyster Mushroom (Pleurotus cystidiosus)", JOURNAL OF OLEO SCIENCE, vol. 63, no. 7, 1 January 2014 (2014-01-01), pages 731-739, XP055289189, JP ISSN: 1345-8957, DOI: 10.5650/jos.ess14043
- DATABASE CAPLUS [Online] CHEMICAL ABSTRACTS SERVICE, COLUMBUS, OHIO, US; HU, JIAN-HUA: "Application of Geotrichum candidum in Fen flavor base liquor making", XP002759975, retrieved from STN Database accession no. 2014:846209 & HU, JIAN-HUA: "Application of Geotrichum candidum in Fen flavor base liquor making", NIANGJIU , 41(1), 54-56 CODEN: NIANE6; ISSN: 1002-8110, 2014,
- DATABASE CAPLUS [Online] CHEMICAL ABSTRACTS SERVICE, COLUMBUS, OHIO, US; GINE BORDONABA, JORDI ET AL: "Suitability of nectarine cultivars for minimal processing: The role of genotype, harvest season and maturity at harvest on quality and sensory attributes", XP002759976, retrieved from STN Database accession no. 2014:644433 & GINE BORDONABA, JORDI ET AL: "Suitability of nectarine cultivars for minimal processing: The role of genotype, harvest season and maturity at harvest on quality and sensory attributes", POSTHARVEST BIOLOGY AND TECHNOLOGY , 93, 49-60 CODEN: PBTEED; ISSN: 0925-5214, 2014, DOI: 10.1016/J.POSTHARVBIO.2014.02.007 10.1016/J.POSTHARVBIO.2014.02.007
- DATABASE CAPLUS [Online] CHEMICAL ABSTRACTS SERVICE, COLUMBUS, OHIO, US; AYDENIZ, BUKET ET AL: "Physico-chemical, Sensory and Aromatic Properties of Cold Press Produced Safflower Oil", XP002759977, retrieved from STN Database accession no. 2013:1560713 & AYDENIZ, BUKET ET AL: "Physico-chemical, Sensory and Aromatic Properties of Cold Press Produced Safflower Oil", JOURNAL OF THE AMERICAN OIL CHEMISTS' SOCIETY , 91(1), 99-110 CODEN: JAOCA7; ISSN: 0003-021X, 2014, DOI: 10.1007/S11746-013-2355-4 10.1007/S11746-013-2355-4
- DATABASE CAPLUS [Online] CHEMICAL ABSTRACTS SERVICE, COLUMBUS, OHIO, US; WANG, BEI ET AL: "Stir bar sorptive extraction-GC-MS for the analysis of volatile compounds in Vidal icewine", XP002759978, retrieved from STN Database accession no. 2013:660825 & WANG, BEI ET AL: "Stir bar sorptive extraction-GC-MS for the analysis of volatile compounds in Vidal icewine", SHIPIN YU FAJIAO GONGYE , 38(11), 131-137 CODEN: SPYYDO; ISSN: 0253-990X, 2012,
- DATABASE CAPLUS [Online] CHEMICAL ABSTRACTS SERVICE, COLUMBUS, OHIO, US; DA COSTA, NEIL C. ET AL: "Comparative analysis of a variety of chili peppers: including components identified in chili peppers for the first time", XP002759979, retrieved from STN Database accession no. 2013:465758 & DA COSTA, NEIL C. ET AL: "Comparative analysis of a variety of chili peppers: including components identified in chili peppers for the first time", ACS SYMPOSIUM SERIES , 1109(HISPANIC FOODS), 25-42 CODEN: ACSMC8; ISSN: 0097-6156, 2012, DOI: 10.1021/BK-2012-1109.CH003 10.1021/BK-2012-1109.CH003
- DATABASE CAPLUS [Online] CHEMICAL ABSTRACTS SERVICE, COLUMBUS, OHIO, US; KURASHOV, E. A. ET AL: "Composition of low molecular weight organic compounds of Trametes pubescens and Flammulina velutipes mycelium", XP002759980, retrieved from STN Database accession no. 2013:39927 & KURASHOV, E. A. ET AL: "Composition of low molecular weight organic compounds of Trametes pubescens and Flammulina velutipes mycelium", MIKOLOGIYA I FITOPATOLOGIYA , 46(2), 145-153 CODEN: MIFIB2; ISSN: 0026-3648, 2012,
- DATABASE CAPLUS [Online] CHEMICAL ABSTRACTS SERVICE, COLUMBUS, OHIO, US; REN, ZHUO-YING ET AL: "GC/MS analysis of components in dried jujube extracted by ASE and its application in cigarettes", XP002759981, retrieved from STN Database accession no. 2009:774548 & REN, ZHUO-YING ET AL: "GC/MS analysis of components in dried jujube extracted by ASE and its application in cigarettes", GUANGPU SHIYANSHI , 26(3), 491-494 CODEN: GUSHEH; ISSN: 1004-8138, 2009,
- DATABASE CAPLUS [Online] CHEMICAL ABSTRACTS SERVICE, COLUMBUS, OHIO, US; HOU, YUANYUAN ET AL: "Identification of specific aroma in flavor of natural milk fat using the cooperation of GC-O and GC-MS", XP002759982, retrieved from STN Database accession no. 2009:396381 & HOU, YUANYUAN ET AL: "Identification of specific aroma in flavor of natural milk fat using the cooperation of GC-O and GC-MS", SHIPIN GONGYE KEJI , 29(3), 143-145 CODEN: SGOKE6; ISSN: 1002-0306, 2008,
- DATABASE CAPLUS [Online] CHEMICAL ABSTRACTS SERVICE, COLUMBUS, OHIO, US; SCHULZ, STEFAN ET AL: "An Antiaphrodisiac in Heliconius melpomene Butterflies", XP002759983, retrieved from STN Database accession no. 2008:205978 & SCHULZ, STEFAN ET AL: "An Antiaphrodisiac in Heliconius melpomene Butterflies", JOURNAL OF CHEMICAL ECOLOGY , 34(1), 82-93 CODEN: JCECD8; ISSN: 0098-0331, 2008, DOI: 10.1007/S10886-007-9393-Z 10.1007/S10886-007-9393-Z
- DATABASE CAPLUS [Online] CHEMICAL ABSTRACTS SERVICE, COLUMBUS, OHIO, US; PLESSIS, C. ET AL: "Novel photolactonisation from xanthenoic esters", XP002759984, retrieved from STN Database accession no. 2001:615181 & PLESSIS, C. ET AL: "Novel photolactonisation from xanthenoic esters", TETRAHEDRON LETTERS , 42(37), 6519-6522 CODEN: TELEAY; ISSN: 0040-4039, 2001, DOI: 10.1016/S0040-4039(01)01296-5 10.1016/S0040-4039(01)01296-5
- DATABASE CAPLUS [Online] CHEMICAL ABSTRACTS SERVICE, COLUMBUS, OHIO, US; ALI, MOHAMMAD ET AL: "Volatile oil constituents of Artemisia scoparia leaves", XP002759985, retrieved from STN Database accession no. 2001:398639 & ALI, MOHAMMAD ET AL: "Volatile oil constituents of Artemisia scoparia leaves", JOURNAL OF MEDICINAL AND AROMATIC PLANT SCIENCES , 22(1B), 366-369 CODEN: JMASF6, 2000,
- DATABASE CAPLUS [Online] CHEMICAL ABSTRACTS SERVICE, COLUMBUS, OHIO, US; WEIDONG, M. A. ET AL: "Volatile compounds of bovine milk as related to the stage of the estrous cycle", XP002759986, retrieved from STN Database accession no. 1998:12852 & WEIDONG, M. A. ET AL: "Volatile compounds of bovine milk as related to the stage of the estrous cycle", JOURNAL OF DAIRY SCIENCE , 80(12), 3227-3233 CODEN: JDSCAE; ISSN: 0022-0302, 1997, DOI: 10.3168/JDS.S0022-0302(97)76296-9 10.3168/JDS.S0022-0302(97)76296-9
- DATABASE CAPLUS [Online] CHEMICAL ABSTRACTS SERVICE, COLUMBUS, OHIO, US; WATANABE, ICHIRO ET AL: "Volatile components of Zinchoge flower (Daphne odora Thunb.)", XP002759987, retrieved from STN Database accession no. 1983:176211 & WATANABE, ICHIRO ET AL: "Volatile components of Zinchoge flower (Daphne odora Thunb.)", AGRICULTURAL AND BIOLOGICAL CHEMISTRY , 47(3), 483-90 CODEN: ABCHA6; ISSN: 0002-1369, 1983, DOI: 10.1080/00021369.1983.10865668 10.1080/00021369.1983.10865668

## Description

The present disclosure relates to biologically active analogs of Emerald Ash Borer sex pheromones.

### BACKGROUND

The following paragraphs are not an admission that anything discussed in them is prior art or part of the knowledge of persons skilled in the art.

The Emerald Ash borer, *Agrilus planipennis* (EAB) (Coleoptera: Buprestidae), is an invasive species causing unprecedented levels of mortality to Ash trees in its introduced range. The natural sex pheromone of EABs is the female-produced macrocyclic lactone (3Z)-dodecen-12-olide, whose structure is shown below:

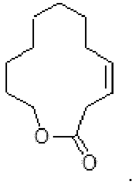

The natural sex pheromone can be used as a lure for detection surveys, as well as for mitigation purposes, such as through mating disruption. However, the natural sex pheromone is costly to synthesize, involving multistep, low-yielding processes.

### INTRODUCTION

Green prism traps placed in the Ash tree canopy, baited with both (3Z)-dodecen-12-olide and (3Z)-hexenol, showed an increase in captures of EAB males by up to 100% compared with traps baited with (3Z)-hexenol alone. Additional studies also demonstrated that addition of (3Z)-dodecen-12-olide to green traps baited with (3Z)-hexenol not only increased trap captures, but also detection rates (i.e., the proportion of traps that captured at least one EAB). These results indicate that (3Z)-dodecen-12-olide has the potential to be used in early detection surveys for EAB, or as a component of an attractant for a trap.

US2013/0028858 describes a composition for the attraction and detection of emerald ash borer, comprising (3Z)-dodecen-12-olide and green leaf volatiles.

A problem associated with using (3Z)-dodecen-12-olide is that the chemical synthesis involves multiple, low yielding steps, and results in an expensive compound. Therefore, there remains a need for a more easily and/or more cheaply produced analog of (3Z)-dodecen-12-olide where the analog has comparable biological activity to the natural sex pheromone.

The authors of the present disclosure have surprisingly identified dodecan-12-olide as a biologically active analog to the natural, female-produced (3Z)-dodecen-12-olide EAB sex pheromone. The structure of dodecan-12-olide is shown below:

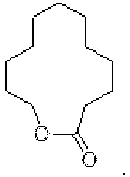

Dodecan-12-olide can thus provide a less expensive compound, in comparison to the natural sex pheromone, which may be used, for example: as a component in an attractant for EAB detection surveys, as a component in an attractant for a trap, as a component in an attractant to draw EABs to non-host trees, as a component in an attractant to draw EABs to Ash trees treated with an insecticide, or any combination thereof.

If applied in sufficient quantities, dodecan-12-olide may be used to reduce the ability of male EABs to locate a mate, or to disrupt male EAB orientation, thereby disrupting the ability for male EABs to mate. Mating disruption may reduce the rate of EAB spreading, reduce the rate of Ash tree mortality caused by EAB, or both. In the context of the present disclosure, reducing the rate of Ash tree mortality refers to reducing the rate that a population of Ash trees is infected and killed by EABs.

In some embodiments, dodecan-12-olide exhibits at least 70% of the activity of the natural sex pheromone under comparable conditions. In particular embodiments, dodecan-12-olide exhibits at least 80% of the activity of the natural sex pheromone. In yet other particular embodiments, dodecan-12-olide exhibits at least 90% of the activity of the natural sex pheromone.

In some embodiments, the present disclosure provides an attractant that includes dodecan-12-olide and a green leaf volatile, such as (3Z)-hexenol.

In other embodiments, the present disclosure provides dodecan-12-olide for use as a sex pheromone analog for EABs. In still other embodiments, the present disclosure provides the use of dodecan-12-olide as a sex pheromone analog for EABs.

Dodecan-12-olide may be used as a sex pheromone analog to attract a male EAB, or to overwhelm the male EAB's ability to locate a female EAB. When overwhelming the male EABs ability to locate a female EAB, it is desirable to use sufficient dodecan-12-olide to substantially saturate the receptors of the male EABs. Attracting male EABs using dodecan-12-olide, or overwhelming their ability to detect female EABs, may disrupt the ability for the male EABs to locate a female EAB. A reduced ability to locate a mate may reduce the rate of EAB spreading, or the rate of Ash tree mortality caused by the EABs. Attracting male EABs using dodecan-12-olide may be used in an EAB detection survey. Methods according to the present disclosure may be used to disrupt EAB mate location, reduce the rate of EAB spreading, capture EABs, or any combination thereof.

According to the present invention there is provided a method of attracting a male Emerald Ash borer (EAB), the method comprising: placing an attractant comprising dodecan-12-olide and a green leaf volatile in a canopy of an Ash tree, or in or near a non-host tree.

The present invention also provides an attractant comprising: dodecan-12-olide, and a green leaf volatile; wherein the attractant includes dodecan-12-olide and green leaf volatile in sufficient amounts to result in a release of: (a) 1 µg of dodecan-12-olide per 5 mg of the green leaf volatile released, to (b) 1 µg of dodecan-12-olide per 0.1 mg of the green leaf volatile released.

In an exemplary embodiment, the present disclosure provides a method for overwhelming the male EAB's ability to locate a female EAB. The method includes administering a composition that comprises dodecan-12-olide to at least a portion of an Ash tree, in the canopy of an Ash tree, or any combination thereof. The dodecan-12-olide may be sprayed on the Ash tree, or high release-rate lures may be placed in the canopy of the Ash tree.

In another exemplary embodiment, the present disclosure provides a method for attracting a male EAB. The method includes placing an attractant that includes dodecan-12-olide and a green leaf volatile, such as (3Z)-hexenol, in a canopy of an Ash tree, or in or near a non-host tree. The Ash tree may be treated with insecticide, such as a trunk-injected systemic insecticide. Mating and laying eggs in the non-host tree may be fatal to at least some of the resulting larva.

In a further exemplary embodiment, the present disclosure provides a method that includes: masking one or more Ash trees from EAB detection using a chemical masking agent on, in or near the one or more Ash trees, and attracting the EABs to a trap, or to an Ash tree lacking the masking agent but treated with insecticide. The attracting may be achieved using an attractant that includes dodecan-12-olide and a green leaf volatile. The chemical masking agent may be a conifer volatile compound, such as a volatile compound from a spruce tree. Specific examples of a spruce volatile compound that may be used include: α-pinene, β-pinene, 3-carene, limonene, α-terpinolene, or a combination thereof. The insecticide may include azadirachtin, emamectin benzoate, imidacloprid, dinotefuran, permethrin, bifenthrin, cyfluthrin, carbaryl, or a combination thereof. Other insecticides or conifer volatile compounds known in the art may also be used.

In another exemplary method, the method includes: disrupting male EAB orientation using a plurality of high release-rate lures that release dodecan-12-olide, and attracting the male EABs to traps baited with an attractant that includes dodecan-12-olide and a green leaf volatile. Disrupting male EAB orientation using high release-rate lures may be achieved by positioning the high release-rate lures in the canopy of the Ash tree, and preferably around the trap. Alternatively, the male EABs may be attracted to an Ash tree that is treated with an insecticide, or to a non-host tree.

Dodecan-12-olide may be synthesized, for example, via Mitsunobu esterification of a saturated ω-hydroxy acid, or via a Baeyer-Villiger oxidation of the commercially available cyclododecanone.

### BRIEF DESCRIPTION OF THE DRAWINGS

Embodiments of the present disclosure will now be described, by way of example only, with reference to the attached Figures.
Figure 1 is an illustration of a synthetic scheme for making dodecan-12-olide.
Figure 2 is an illustration of a synthetic scheme for making dodecan-12-olide.
Figure 3 is an illustration of a synthetic scheme for making (2E)-dodecen-12-olide.
Figure 4 is a graph illustrating the results of electroantennography testing of dicholormethane (DCM), (3E)-dodecen-12-olide (also referred to herein as "(3E)-lactone"), (3Z)-dodecen-12-olide (also referred to herein as "(3Z)-lactone"), and dodecan-12-olide.
Figure 5 is a graph illustrating the results of olfactometer responses of male EABs to (3E)-lactone, (3Z)-lactone, and dodecan-12-olide.
Figure 6 is a graph illustrating the results of olfactometer responses of female EABs to (3E)-lactone, (3Z)-lactone, and dodecan-12-olide.
Figure 7 is a graph illustrating the results of three field trials testing green sticky prism traps baited with (3Z)-hexenol alone or combined with either (3Z)-lactone or dodecan-12-olide.
Figure 8 is a graph illustrating the results of a field trial testing and determining whether the location of the trap in the Ash tree canopy has an effect on the number of captured EABs.
Figure 9 is a graph illustrating the results of a test to determine whether different light conditions affect the number of EAB calls.
Figure 10 is a graph illustrating the results of a field trial testing whether four high release-rate disrupter lures treated with the (3Z)-lactone could push EABs towards a trap baited with (3Z)-hexenol and (3Z)-lactone.
Figure 11 is a graph illustrating the results of a field trial testing whether seven high release-rate disrupter lures treated with the (3Z)-lactone could push EABs towards a trap baited with (3Z)-hexenol and (3Z)-lactone.
Figure 12 is a graph illustrating the results of a field trial testing whether volatile spruce compounds could be used to mask traps baited with (3Z)-hexenol and (3Z)-lactone.

### DETAILED DESCRIPTION

The natural sex pheromone (3Z)-dodecen-12-olide and its geometrical isomer, (3E)-dodecen-12-olide, are both electroantennogram (EAG) active. Both compounds, in combination with (3Z)-hexenol, effectively trap EABs (mostly males) in green prism traps deployed in the Ash tree canopy. The structure of (3E)-dodecen-12-olide is shown below:

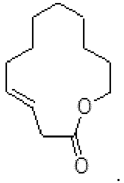

Chemoreceptors are very highly compound specific, as discussed by Xu et al. in 2012 (Xu P, Garczynsk, SF, Atungulu E, Syed Z, Choo Y-M, Vidal DM, Zitelli CH, Leal, WS (2012) Moth sex pheromone receptors and deceitful parapheromones. PLOS One 7: 1-9). In an effort to identify biologically active analogs of the (3Z)-lactone, the authors of the present disclosure tested various cyclic lactone esters. Examples of tested analogs include: 2E-dodecan-12-olide, pentadecan-15-olide, and dodecan-12-olide. The structures of 2E-dodecan-12-olide, pentadecan-15-olide, and dodecan-12-olide are shown below:

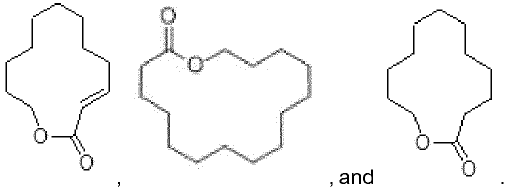

While 2E-dodecan-12-olide and pentadecan-15-olide were found to have electroantennogram activity with male or female EABs that was not significantly different from the controls, it was surprisingly found that dodecan-12-olide showed electroantennogram activity with both male and female EABs that was comparable to the corresponding electroantennogram activity both the natural (3Z)-lactone and the (3E)-lactone analog.

Given the lack of electroantennogram activity with 2E-dodecan-12-olide and pentadecan-15-olide, it would not have been possible to predict *a priori* the activity of dodecan-12-olide. The activity of dodecan-12-olide in bioassays confirmed that the compound could be used as a sex pheromone analog.

In some examples, the present disclosure provides an attractant that includes dodecan-12-olide. When placed in an Ash tree that is suffering from tissue damage, green leaf volatiles released by the Ash tree may combine with the released dodecan-12-olide to attract male EABs to the attractant.

In preferred embodiments, the present disclosure provides an attractant that includes dodecan-12-olide and a green leaf volatile, such as (3Z)-hexenol. A green leaf volatile is a volatile organic compound that is released when a plant suffers tissue damage. Green leaf volatiles include aldehydes, esters, and alcohols of 6-carbon compounds released after wounding or insect feeding. In the context of the current specification, green leaf volatiles refers to volatiles released by Ash trees.

Other examples of green leaf volatiles that may be used in combination with dodecan-12-olide include: (2E)-hexenol, hexanal, (2E)-hexenal, and congeneric acetates of these alcohols.

The attractant may include a lure that releases the dodecan-12-olide and a source of green leaf volatile that releases the volatile organic compound. The source of green leaf volatile may be a vessel, such as a pouch, containing a volume of the green leaf volatile. The vessel is preferably made of polyethylene since polyethylene is not dissolved by the organic compound. Green leaf volatiles effuse through the polyethylene vessel and are released into the environment. The rate of effusion is dependent on, among other things, the surface area of the vessel and the thickness of the walls of the vessel. The walls of the vessel used to release the green leaf volatile may be from 0.1016 mm (4 mils (that is 0.004 inches)) to 0.2032 mm (8 mils) thick. The vessel containing the green leaf volatile is preferably sized and shaped to release the green leaf volatile at a rate from 40 mg/day to 400 mg/day. The walls are preferably 0.1524 mm (6 mils) thick, which provides a release rate of the green leaf volatile that is from 50 to 100 mg/day, depending on the weather.

In attractants that either include or lack the green leaf volatile, the dodecan-12-olide may be dissolved in a carrier solvent and applied to the lure. One exemplary carrier solvent is dichloromethane. The dodecan-12-olide may be applied to the lure, such as a piece of rubber, resulting in a lure loaded with dodecan-12-olide. The lure may be made from the same natural rubber material as is used in rubber Suba•Seal™ septa. The natural rubber has a release rate that is substantially constant over time for several months under field conditions. Lures with a constant release rate are preferable to lures with an exponential or a first order release rate.

The lure may be treated with a sufficiently high concentration of dodecan-12-olide to result in a release rate of from 20 to 200 µg of dodecan-12-olide per day. In particular embodiments, the lure will have a release rate of from 40 to 120 µg of dodecan-12-olide per day. In still other particular embodiments, the lure will have a release rate of from 50 to 90 µg of dodecan-12-olide per day. In specific embodiments, the lure will have a release rate of from 60 to 80 µg of dodecan-12-olide per day.

In attractants that include the green leaf volatile, the attractant may include a lure loaded with sufficient dodecan-12-olide, and a source of sufficient green leaf volatile to release from (a) 1 µg of dodecan-12-olide per 5 mg of the green leaf volatile released, to (b) 1 µg of dodecan-12-olide per 0.1 mg of the green leaf volatile released. In particular embodiments, the attractant may release from 1 µg of dodecan-12-olide per 2 mg of the green leaf volatile released, to about 1 µg of dodecan-12-olide per 0.25 mg of the green leaf volatile released. In still other particular embodiments, the attractant may release from 1 µg of dodecan-12-olide per 1.25 mg of the green leaf volatile released, to 1 µg of dodecan-12-olide per 0.5 mg of the green leaf volatile released.

Alternatively, the attractant may be a vessel containing a liquid mixture of the dodecan-12-olide and the green leaf volatile. As discussed above, the vessel is preferably made of polyethylene and the walls of the vessel may be from 0.1016 mm (4 mils) to 0.2032 mm (8 mils) thick. The rate of effusion of the dodecan-12-olide is dependent on the concentration of dodecan-12-olide in the mixture. The mixture may contain sufficient dodecan-12-olide mixed with the green leaf volatile to result in a release rate from the vessel of 1 µg of dodecan-12-olide per 5 mg of the green leaf volatile released, to 1 µg of dodecan-12-olide per 0.1 mg of the green leaf volatile released. In particular embodiments, the mixture may contain sufficient dodecan-12-olide to result in a release rate of from 1 µg of dodecan-12-olide per 2 mg of the green leaf volatile released, to 1 µg of dodecan-12-olide per 0.25 mg of the green leaf volatile released. In still other particular embodiments, the mixture may contain sufficient dodecan-12-olide to result in a release rate of from 1 µg of dodecan-12-olide per 1.25 mg of the green leaf volatile released, to 1 µg of dodecan-12-olide per 0.5 mg of the green leaf volatile released. The vessel containing the green leaf volatile is preferably sized and shaped to release the green leaf volatile at a rate from 40 mg/day to 400 mg/day.

In other embodiments, the present disclosure provides dodecan-12-olide for use as a sex pheromone analog for EABs. In still other embodiments, the present disclosure provides the use of dodecan-12-olide as a sex pheromone for EABs.

Using dodecan-12-olide as a sex pheromone analog may attract male EABs to a trap that includes the dodecan-12-olide. The trap may be, for example, a three-sided sticky prism trap, a Lindgren multifunnel trap, or another trap known in the art. Three-sided sticky prism traps are preferable as they provide a large surface on which the dodecan-12-olide may be applied. The trap may be green or purple, but green is preferred as green traps have been found to preferably capture males. The trap may preferably be suspended in the canopy of an Ash tree, for example from 20 to 40 feet above the ground. Preferably the trap is suspended 9.144 meters (30 feet) above the ground. The trap may preferably be suspended on the south aspect of the tree.

In order to attract male EABs in a natural environment, it is desirable to release, on average, at least 20 µg of dodecan-12-olide per day per attractant source. In particular embodiments, it is desirable to release, on average, at least 40 µg of dodecan-12-olide per day per attractant source. In other particular embodiments, it is desirable to release, on average, at least 60 µg of dodecan-12-olide per day per attractant source.

Dodecan-12-olide may be used to attract male EABs to a tree or other location that is not suitable for EAB spreading. For example, dodecan-12-olide may be used to attract male EABs to a non-host tree (i.e. a tree other than an Ash tree, such as a conifer tree). Mating and laying eggs in the non-host tree may be fatal to at least some of the resulting larva.

In yet other embodiments, the dodecan-12-olide may be used to overwhelm the receptors on male EAB antennae and reduce or disrupt the ability of the male EABs to locate a female EAB. Such a disruption may reduce the rate of EAB spreading, or reduce the rate of Ash tree mortality caused by the EABs.

In embodiments where it is desirable to overwhelm male EABs ability to locate a mate by substantially saturating the receptors of the male EABs, methods according to the present disclosure may use a plurality of high release-rate lures per tree, where each lure releases on average at least 0.5 mg of dodecan-12-olide per day, and preferably from 1 to 10 mg of dodecan-12-olide per day. The method may use sufficient lures to result in 1 mg of dodecan-12-olide released per m³ of canopy volume per day. Alternatively, the methods may use a plurality of high release rate vessels, such as pouches, containing dodecan-12-olide. The vessel is preferably made of polyethylene since polyethylene is not dissolved by the dodecan-12-olide. The walls of the vessel used to release the dodecan-12-olide may be from 0.1016 mm (4 mils) to 0.2032 mm (8 mils) thick.

The present disclosure provides a method for attracting male EABs. Dodecan-12-olide may be applied to at least a portion of an Ash tree, to a non-host tree that is close to an Ash tree, in the canopy of an Ash tree, or any combination thereof. For example, the male EABs may be attracted to a trap, such as discussed above, having an attractant that includes the dodecan-12-olide where the trap is placed in the canopy of an Ash tree. In another example, an attractant that includes the dodecan-12-olide could be applied to a non-host tree. Attracting the male EABs may disrupt their ability to locate a mate. Such a disruption may reduce the rate of EAB spreading, or reduce the rate of Ash tree mortality caused by the EABs.

Dodecan-12-olide, or an attractant that includes dodecan-12-olide, may be used to disrupt EAB mating or to kill EABs in a "push-pull" method.

In an exemplary "push-pull" method, a number of Ash trees are masked from EAB detection, or EAB are repelled from the Ash trees, by applying a chemical stimulus on, in, or near the Ash trees. Simultaneously, an attractant that includes dodecan-12-olide and a green leaf volatile is used to attract EABs to a trap, or to another Ash tree on which, or in which, a systemic insecticide is applied. The insecticide may be azadirachtin, emamectin benzoate, imidacloprid, dinotefuran, permethrin, bifenthrin, cyfluthrin, carbaryl, or a combination thereof. Other insecticides known in the art may also be used. TreeAzin™ is an injectible commercial insecticide formulated with azadirachtin, an extract of neem tree seeds. Alternatively, the attractant may be used to attract EABs to a non-host tree.

While the method is conceptually straight-forward, it is not possible to predict which chemical stimuli will "push" the EAB toward the trap. The authors of the present disclosure believe that conifer volatiles could be used as chemical stimuli since EAB larva would not survive if laid in conifer trees. In particular examples, the volatiles from a spruce tree may be used. Examples of spruce tree volatiles that may be used as a masking agent in such a method include: α-pinene, β-pinene, 3-carene, limonene, α-terpinolene, or a combination thereof.

In another exemplary "push-pull" method, a trap is baited with an attractant that includes dodecan-12-olide and a green leaf volatile, such as (3Z)-hexenol. The trap is positioned in an Ash tree, as discussed above, and a plurality of high release-rate lures releasing dodecan-12-olide are positioned in the canopy of the Ash tree, preferably around the trap and preferably at about the same height as the trap. Alternatively, the trap is positioned in a non-host tree and a plurality of high release-rate lures releasing dodecan-12-olide are positioned in the canopy of an Ash tree close to the non-host tree. In particular examples, the high release-rate lures are polycaprolactone-based lures. High release-rate lures are lures that release at least 0.5 mg dodecan-12-olide per day. In some examples, high release-rate lures release from 1 to 10 mg/day. Preferably, a sufficient number of high release-rate lures are used to result in 1 mg of dodecan-12-olide being released per m³ of canopy volume per day. Without wishing to be bound by theory, these high release rate disrupter lures are believed to disrupt EAB orientation since they lack the green leaf volatile, and the EABs are instead more attracted to the trap or non-host tree that is baited with an attractant that more closely mimics the natural attractant.

### Experimental Results

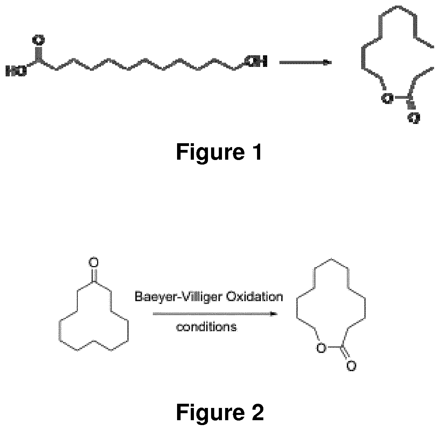

**Synthetic Chemistry.** *(3Z)-Dodecen-12-olide:* This compound was prepared as described by Silk et al. in 2011 (Silk PJ, et al (2011) Evidence for a volatile pheromone in Agrilus planipennis Fairmaire (Coleoptera: Buprestidae) that increases attraction to a host foliar volatile. Env Entomol 40: 904-916). The synthesized (3Z)-dodecen-12-olide was > 98% pure with ca. 2 % of the *E*-isomer. The spectral data for the prepared compound corresponded to the data reported by Silk et al. in 2011. (*3E*)*-Dodecen-12-olide:* This compound was synthesized similarly to the Z-isomer, however, a modified Julia-Kocienski *trans*-olefination was used to introduce the *E*-olefin at position 3. The method is described by Silk et al. in 2011 and by MaGee et al. in 2013 (Magee D I, et al. (2013) Synthesis of (3E)-dodecen-12-olide, a potential pheromone component of the emerald ash borer. Synth Comm 43: 1368-1377). The synthesized (3E)-dodecen-12-olide was > 98 % pure with ca. 2 % Z-isomer. The spectral data for the prepared compound corresponded to the data reported by MaGee et al. in 2013. *Dodecan-12-olide*: This compound was synthesized as illustrated in Figures 1 and 2. Figure 1 illustrates the synthesis via Mitsunobu cyclization using the method reported by Boden et al. in 1993 (Boden CD, et al (1993) A concise, efficient and flexible strategy for the synthesis of the pheromones of Oryzaephilus and Cryptolestes grain beetles. Synthesis 4: 411-420). This method involves the Mitsunobu esterification of ω-hydroxyacid using PPh₃ and DIAD (diisopropyl azodicarboxylate) in toluene at RT. This method provided the dodecan-12-olide in a 55 % yield and one step from the hydroxyacid.

Figure 2 illustrates the synthesis via Baeyer-Villiger oxidation (BVO) of cyclododecanone. This method provides the dodecan-12-olide in one step. Reaction of cyclododecanone with *meta-*chloroperoxybenzoic acid (*m*CPBA, commercially available) provided the dodecan-12-olide. This reaction (Table 1, Entry 1), however, proved to be extremely slow; this was also reported by van der Mee et al. in 2006 (van der Mee L, et al (2006) Investigation of lipase-catalysed ring-opening polymerization of lactones with various ring sizes. Kin Evaluat Macromol 39: 5021-5027), who refluxed cyclododecanone and *m*CPBA in CH₂Cl₂ for 10 d and still reported incomplete consumption of cyclododecanone.

The authors of the present disclosure found that toluenesulfonic acid monohydrate-(TsOH·H₂O)-catalyzed *m*CPBA BVO of cyclododecanone proceeds with 99.8% completion in 3.5 wks. (Table 1, Entry 2). The use of basic conditions (2 equiv. of NaHCO₃ instead of a catalytic amount of TsOH·H₂O) gave 98% completion after 2.5 months (Table 1, Entry 1). A large-scale synthesis of dodecan-12-olide from cyclododecanone using *m*CPBA and a catalytic amount of TsOH·H₂O was conducted and dodecan-12-olide was obtained in 87% yield.

The more reactive trifluoroperoxyacetic acid (prepared *in situ* from trifluoroacetic anhydride and hydrogen peroxide) gave dodecan-12-olide from cyclododecanone in 11 d, 72% yield and with complete consumption of the starting material (Table 1, Entry 3). Also, the reagent Oxone® (potassium peroxymonosulfate, 2KHSO₅·KHSO₄·K₂SO₄) was completely inert toward cyclododecanone when stirred at RT in dichloromethane over 2 d, and magnesium monoperphthalate hexahydrate (MMPP)/NaHCO₃ only converted -0.5% of starting material cyclododecanone to product dodecan-12-olide when stirred at room temperature in 1:1 MeOH: H₂O over 1 d, and further stirring at this temperature produced no further conversion.

The reagent permaleic acid converts cyclododecanone to dodecan-12-olide in 1 d, and the authors of the present disclosure found that cyclododecanone is cleanly converted to dodecan-12-olide by stirring with a solution of permaleic acid in CH₂Cl₂ at RT for 5 d in 75% yield (Table 1, Entry 4).

**Table 1: Baeyer-Villiger Oxidation (BVO) of cyclododecanone (see Figure 2).**

| | Entry Conditions | Reaction Time | Percentage Yield of dodecan-12-olide |
|---|---|---|---|
| 1 | 10 equiv. *m*CPBA, 2 equiv. NaHCO₃, CH₂Cl₂, RT. | 2.5 Months | 59^{a} |
| 2 | 2.1 equiv. *m*CPBA, 0.04 equiv. TSOH·H₂O, CH₂Cl₂, RT | 3.5 Weeks | 87^{b} |
| 3 | 10 equiv. H₂O₂ (35 wt% aqueous), 31 equiv. (CF₃CO)₂, 1 equiv. Na₂HPO₄·7H₂O, CH₂Cl₂, RT. | 11 Days | 72^{c} |
| 4 | Permaleic acid (generated *in situ* from maleic anhydride, 35 wt% aqueous H₂O₂, and acetic anhydride), CH₂Cl₂, RT | 5 Days | 75^{b} |

| | | | |
|---|---|---|---|
| ^{a}∼98% Consumption of ketone cyclododecanone by GC/MS. ^{b}∼99.8% Consumption of ketone cyclododecanone by GC/MS. ^{c}100% Consumption of ketone cyclododecanone by GC/MS. | | | |

The spectral data for the prepared dodecan-12-olide corresponded to the data reported by Taber and Qui in 2013 (Taber D F, Qiu J (2013) Permaleic acid: Baeyer-Villiger oxidation of cyclododecanone. J Chem Educ 90: 1103-1104). The spectral data is: R_{f} = 0.24 (1:20 EtOAc:hexanes). ¹H NMR (CDCl₃, 400 MHz): δ 4.12 (AA'XX', 2H), 2.33 (AA'XX', 2H), 1.60 - 1.66 (m, 4H), 1.27 - 1.41 (m, 14H). ¹³C NMR (CDCl₃, 100 MHz): δ 174.1, 64.5, 34.6, 27.4, 26.6, 26.4, 26.3, 25.35, 25.31, 24.9, 24.5, 24.2. IR (Neat, cm⁻¹): 2928 (m), 2859 (m), 1730 (s), 1361 (m), 1380 (w), 1334 (w), 1247 (m), 1173 (w), 1140 (m), 1096(w), 1049 (w). MS (EI, 70 eV) (main peaks): *m*/*z* 55 (base peak), 69, 83, 98, 110, 123, 125, 129, 138, 151, 162, 169, 180, 198 (M⁺). HMRS for dodecan-12-olide: ([C₁₂H₂₂NaO₂⁺] calc. 221.15133, found 221.1512, mass measurement error of -0.59 ppm).

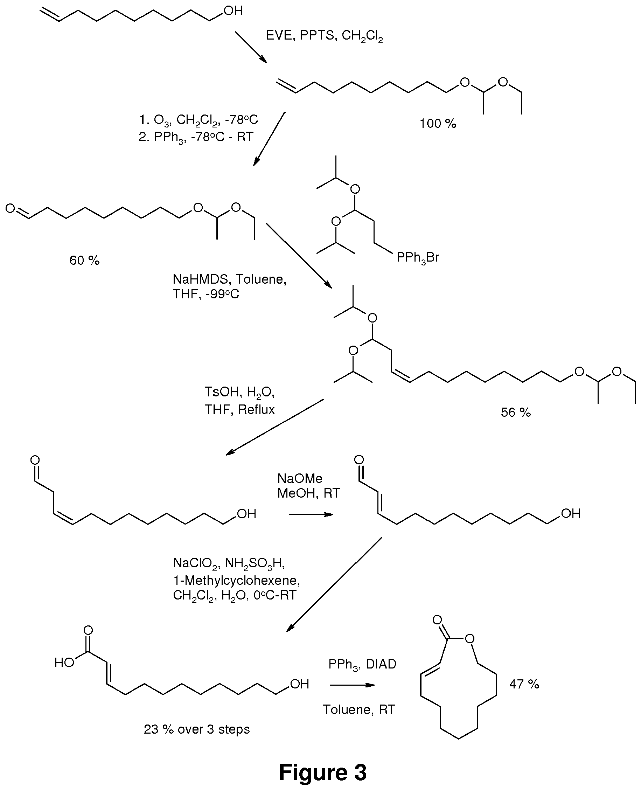

The pentadecan-15-olide was obtained from Sigma-Aldrich. The 2E-dodecen-12-olide was synthesized following the scheme shown in Figure 3.

**Experimental Insects.** Trees with larval EAB were felled in Lambton and Middlesex Counties, Ontario, and infested logs were transported to the Great Lakes Forestry Centre in Sault Ste. Marie, Ontario. Storage and rearing protocols have been previously reported by Silk et al. in 2009 (Silk PJ, et al (2009) A contact sex pheromone component of the emerald ash borer Agrilus planipennis Fairmaire (Coleoptera: Buprestidae). Naturwissenschaften 96: 601-608). Emerged adults were kept on a 16:8 h L:D cycle and supplied with water and foliage of evergreen ash, Fraxinus uhdei (Wenzig) Linglesh. These insects were sent to the Atlantic Forestry Centre laboratory (Fredericton, New Brunswick) under a Canadian Food Inspection Agency movement certificate, placed in the quarantine facility, and used within 3-4 d.

**Electroantennography.** Electroantennogram analyses (EAG) were conducted using methods and equipment generally described by Silk et al. in 2007 (Silk PJ, et al (2007) Evidence for a male-produced pheromone in Tetropium fuscum (F.) (Coleoptera: Cerambycidae). Naturwissenschaften 94: 697-701). Antennae were excised close to the head and mounted using electrode gel (Spectra 360 electrode gel; Parker, Fairfield, NJ, USA) on an EAG probe (gold) for electrical contact. EAG signals were recorded using Syntech recording and analysis software v. 2.6 (Syntech, Hilversum, The Netherlands).

The (3Z)- and (3E)-lactones, and dodecan-12-olide were tested using the puff technique described by Silk et al. in 2011 (Silk PJ, Ryall K, Mayo P, Lemay M, Grant G, Crook D, Cossé A, Fraser I, Sweeney JD, Lyons DB, Pitt D, Scarr T, Magee D (2011) Evidence for a volatile pheromone in Agrilus planipennis Fairmaire (Coleoptera: Buprestidae) that increases attraction to a host foliar volatile. Env Entomol 40: 904-916). Briefly: two microliters of serially diluted solutions (dichloromethane; DCM) of synthetic compounds were applied to filter paper strips (0.5 cm x 5 cm, Whatman No.1). The filter paper strips were placed in 14 cm long Pasteur pipettes, hereafter referred to as stimulus cartridges, after 5 min at room temperature. The stimulus dose tested was 1 µg. Male and female antennae were exposed to single 0.2s puffs of odor-bearing air at 5 ml/s by placing the tip of a stimulus cartridge into a hole of a glass tube (0.7 cm ID x 20 cm), 10 cm from the outlet and 11 cm away from the antennal preparation. Airflow through the glass tube was passed through a water bubbler and set at 10 ml/s. Each antennal preparation was tested with freshly prepared sets of stimuli cartridges using ∼6 male and -10 female antennae/treatment and used once for each treatment.

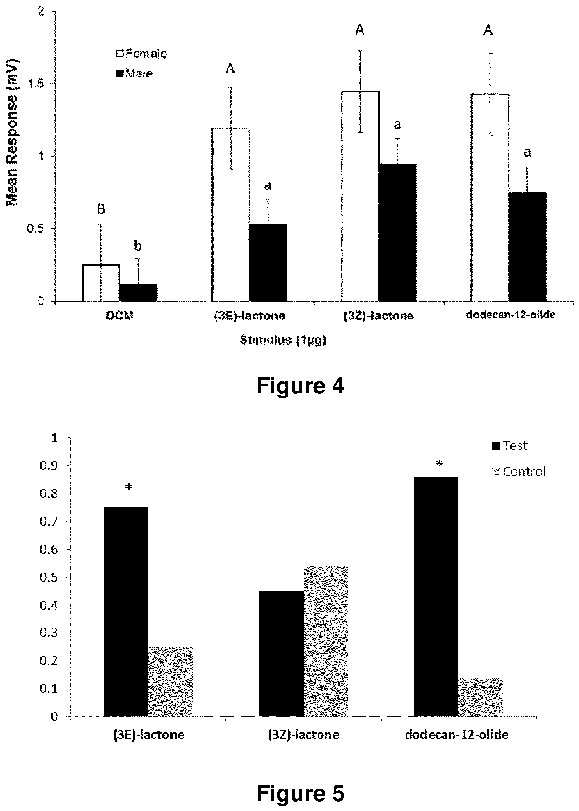

The mean responses of both male and female EAB antennae to the (3Z)-lactone, the (3E)-lactone, and dodecan-12-olide (1 µg source concentration) were not significantly different (P < 0.05; Tukey's), but were significantly greater than those to the solvent control (dichloromethane) stimulus. The results are illustrated in Figure 4, which shows mean EAG responses of male and female EAB to the compounds ± standard error.

**Two-choice Olfactometer Bioassays.** A Y-tube olfactometer (Analytical Research Systems Inc, Micanopy, Florida, USA) was used to test for short-range attraction of adult EAB to the lactones. The glass olfactometer (1.5 cm i.d.) had an 11-cm main stem that branched into two 9-cm arms. Each arm was connected to a cylinder that contained the stimulus. Charcoal-filtered air was passed into each arm at a flow rate of 1.2 L/min. Treatments were 1 µg each of (3Z)-lactone, (3E)-lactone, and dodecan-12-olide. Each stimulus was diluted in dichloromethane, placed on a strip of filter paper, and given 1 min for the solvent to evaporate before being placed in the olfactometer. A filter paper with only solvent (control) was placed in the other arm of the olfactometer. The apparatus was rinsed with acetone after each treatment, and the arm attached to the test stimulus was randomized between replicates. For each trial, a single EAB (male or female) was given 10 min to choose between the two stimuli. A choice was recorded when the beetle passed a "finish line", 7 cm beyond the branching point of each arm. "No choice" was recorded if the beetle failed to pass either finish line after the 10 min. Beetles were 8-14 d old, and 18-23 beetles were used per treatment.

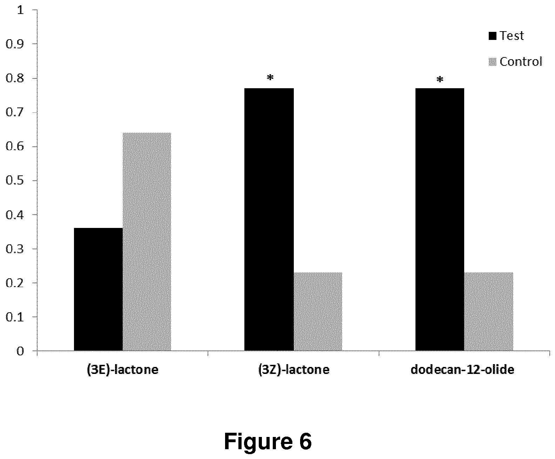

In the Y-tube olfactometer assay at the dosages tested, males were significantly attracted to (3E)-lactone (χ2 = 4; df =1; P = 0.046) but not attracted to the (3Z)-lactone (χ2 = 1; df = 1; P =0.347). The opposite was true for females, which were somewhat attracted to the (3Z)-lactone (χ2 = 3.77; df = 1; P = 0.052) but not to the (3E)-lactone (χ2 = 0; df = 1; P =1). Both sexes were attracted to dodecan-12-olide (χ2 = 4; df =1; P = 0.046). Among both females and males, there was a high proportion that made no choice in the olfactometer (-50 %). The results are illustrated in Figure 5, which shows the results for the males, and in Figure 6, which shows the results for the females. The y-axis indicates the proportion of the beetles that chose that arm. For example the results from the (3E)-lactone indicate that about 75% chose the stimulus, and about 25% chose the control. A chi-square goodness of fit test was used to test whether the ratio of beetles choosing the stimulus vs. the hexane control differed significantly from 1:1; * represents significant differences.

**Field Trapping Studies.** Three trapping experiments were conducted to test the effects of (3Z)-lactone and dodecan-12-olide on mean captures of EAB on dark green sticky prism traps using protocols discussed by Francese et al. in 2010 (Francese JA, Crook DJ, Fraser I, Lance DA, A. J. Sawyer AJ, Mastro VC (2010a) Optimization of trap color for the emerald ash borer, Agrilus planipennis (Coleoptera: Buprestidae). J Econ Entomol 103: 1235-1241) co-baited with (3Z)-hexenol . Urban street trees were used; trees were 20-40 cm in diameter, and 10-16 m in height. Blocks were chosen based on the proximity of known infested trees at low to moderate densities; trees used for the trapping experiment showed few obvious signs or symptoms of infestation. Dark green prism sticky traps (0.30 x 25.00 x 58.75 cm) (Synergy Semiochemicals Corp., Burnaby, British Columbia) were used in all field trials. Traps were spaced ∼ 25 m apart, and lure treatments replicated in a randomized complete block design. Traps were deployed using either a limb hook over a lower to mid-canopy branch or a single rope over a mid-canopy branch. In both years, traps were checked every 2 wk and all EAB were collected, counted, and sexed.

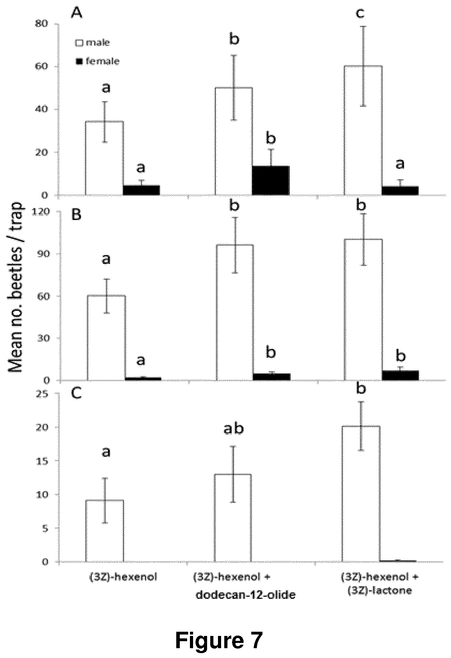

Traps were baited with one of three treatments: 1) (3Z)-hexenol alone; 2) 3.0 mg dose of (3Z)-lactone + (3Z)-hexenol; or 3) dodecan-12-olide + (3Z)-hexenol. The dodecan-12-olide dose was 3.0 mg or 5.0 mg. A higher dose of the analog was used to attempt to increase its effect on captures of EAB relative to the (3Z)-lactone. (3Z)-Lactone and the analog were each loaded onto rubber septa lures (Wheaton Scientific, Millville, NJ). (3Z)-Hexenol lures were obtained from Synergy Semiochemicals. Release rates of the 3.0 mg (3Z)-lactone, 3.0 mg and 5.0 mg dodecan-12-olide lures, and (3Z)-hexenol were ∼66 µg /d, ∼60 µg/d and ∼80 µg/d. These values were determined as in Silk et al. 2011, and 50-100 mg / d (by weight loss), respectively, at 25°C. The (3Z)-lactone and analog lures were estimated to maintain sustained and almost constant release rates for a minimum of 6 wk, and thus were not replaced during the experiment. Similarly, (3Z)-hexenol lures were not replaced during the experiment. Mean catch of male EAB varied significantly among the three treatment trials (χ2 = 81.19, df = 2, P < 0.001) (χ2 = 62.51, df = 2, P < 0.001) and (χ2 = 42.135, df = 2, P < 0.001), as illustrated in Figure 7.

The dose of the tested compounds was the same in the results shown in Figure 7a (3 mg per lure). The dose of the dodecan-12-olide was higher (5 mg per lure) than the dose of the (3Z)-lactone (3 mg per lure) in the results shown in Figures 7b and 7c. The treatment was replicated 11 times in the results shown in Figure 7a, and replicated 12 times the results shown in Figures 7b and 7c.

In two of three trials, traps baited with (3Z)-hexenol + dodecan-12-olide captured significantly more male EAB than traps baited with (3Z)-hexenol alone (Figures 7a and 6b). Similarly, in two of three trials, where the dose of the dodecan-12-olide 5 mg per lure, mean catch of EAB was not significantly different between traps baited with (3Z)-hexenol + dodecan-12-olide versus (3Z)-hexenol + (3Z)-lactone (Figures 7b and 6c).

In the trial where the traps all used 3 mg of compound per lure, traps baited with (3Z)-hexenol + dodecan-12-olide captured approximately 50 male beetles while traps baited with (3Z)-hexenol + (3Z)-lactone captured approximately 60 male beetles (Figure 7a). Dodecan-12-olide is about 85% as active in these trials as the natural (3Z)-lactone under comparable conditions.

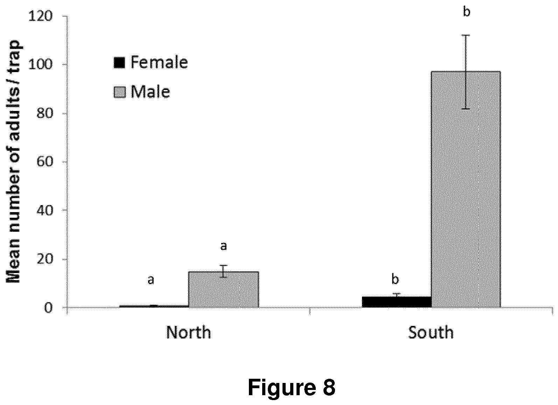

Mean catch of female EAB also varied significantly among the three treatments in two of the three trials (χ2 = 80.693, df = 2, P < 0.001) and (χ2 = 22.271, df = 2, P < 0.001). Too few females (two) were captured in the results shown in Figure 7c for analysis. In the results shown in Figure 7a, significantly more females were captured on traps baited with dodecan-12-olide compared with the other two treatments. In the results shown in Figure 7b, more females were captured on traps baited with either dodecan-12-olide or (3Z)-lactone compared with (3Z)-hexenol alone (Figure 7b; P < 0.01); similar numbers of females were captured on traps baited with dodecan-12-olide vs. (3Z)-lactone (P = 0.102). **Trap Placement.** The location of the trap was tested by deploying dark green sticky prism traps in the canopy, on the north and south aspects of the same tree. Each trap was baited with 3.0 mg (3Z)-lactone and (3Z)-hexenol in low-moderate density EAG populations. The results are illustrated in Figure 8, which indicate that traps placed in the south aspect show increased trapping of both male and female EABs. In the context of the present disclosure, the term "south aspect" should be understood to refer to a position that is within 30° from due south. Similarly, the term "north aspect" should be understood to refer to a position that is within 30° from due north.

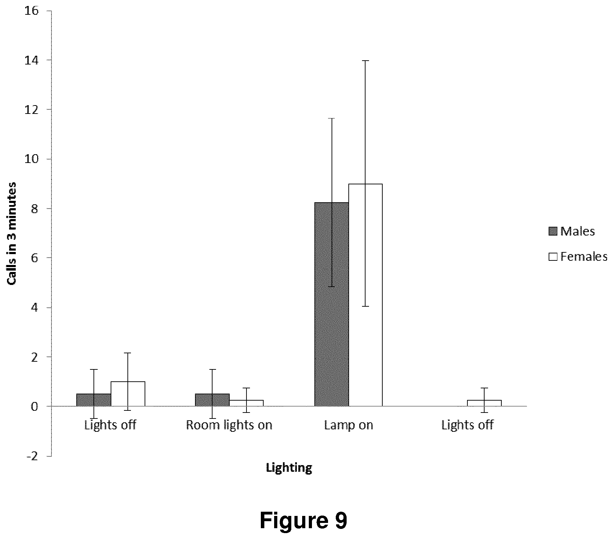

These results may be due to the increased amount of light falling on the south facing traps since the tested trees were in the northern hemisphere. Different light conditions were tested for EAB behaviours that are referred to as "calling behaviours," which are behaviours performed by EAB males leading up to mating. The results are illustrated in Figure 9, which show that lamps, but not fluorescent lights, increase the number of calls by both male and female EABs. Given the broad spectra of incandescent and halogen lamps, in comparison to the narrow peaks in the spectra for fluorescent lights, these data suggest that placing traps in a sunny location in the tree would increase the number of EABs attracted to the trap.

**Push-Pull Trial.** A trial was performed to identify whether EABs could be pulled towards a trap baited with (3Z)-hexenol and (3Z)-lactone, while being pushed away from high release-rate lures that release only the (3Z)-lactone. Three groups of traps were studied in 13 replications: (A) control-only, where the trap was baited with (3Z)-hexenol alone; (B) attractant-only, where the trap was baited with (3Z)-hexenol and (3Z)-lactone; and (C) attractant and disrupter; where the trap was baited with (3Z)-hexenol and (3Z)-lactone and the trap was surrounded by high release rate disrupter lures releasing (3Z)-lactone only.

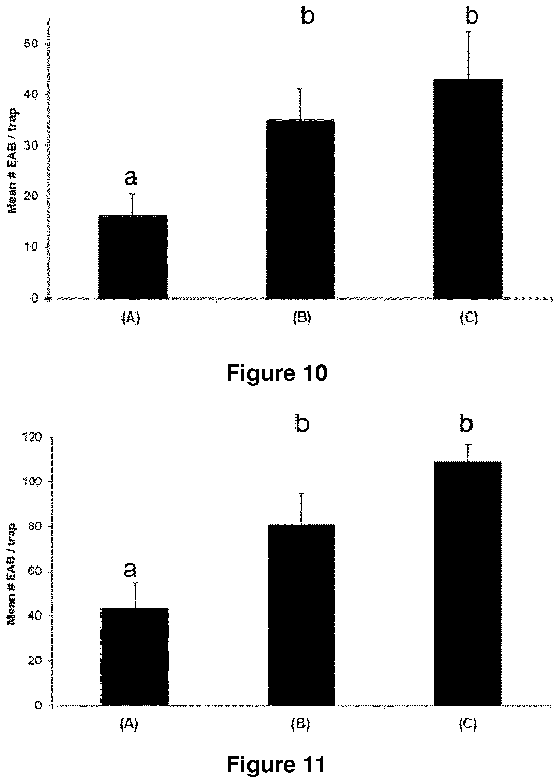

The results illustrated in Figure 10 show the total captures using four high release rate disrupter lures. The results illustrated in Figure 11 show the total captures using seven high release rate disrupter lures. Increasing the number of high release-rate lures proportionally increased the number of EABs captured. In view of the results discussed above, the authors of the present disclosure predict that dodecan-12-olide could be used as a replacement for the (3Z)-lactone.

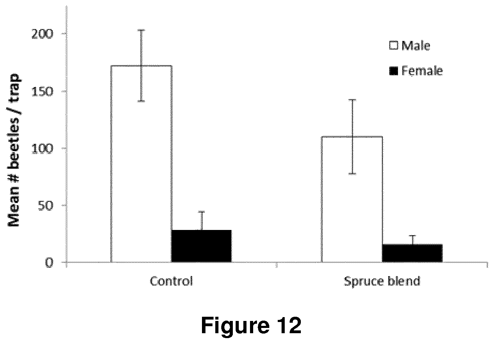

**Non-host volatile as masking compound.** A trial was performed to identify whether a blend of volatile spruce compounds could be used to reduce the attraction of traps baited with (3Z)-hexenol and (3Z)-lactone. The blend of volatile compounds included: α-pinene, β-pinene, 3-carene, limonene, and α-terpinolene. Control traps baited with (3Z)-hexenol and (3Z)-lactone, and test traps baited with (3Z)-hexenol and (3Z)-lactone but masked with the blend of spruce compounds, were placed in Ash tree canopies. The numbers of EABs captured per trap were measured. The results are illustrated in Figure 12, which shows that trap captures for male EABs were significantly reduced on traps masked with the blend of spruce compounds (t = 3.151, df=9, P = 0.012), as compared to the control traps baited (using a paired t-test on captures). This reduction was not observed for females EABs (t = 1.588, df=9, P = 0.147). The authors of the present disclosure believe that any one of the volatiles could be used separately as a masking compound.

**Statistical Analysis.** For the EAG results, male and female EAG responses were submitted to analysis of variance (ANOVA) and mean responses to each of the tested compounds separated using Tukey's test (P < 0.05). For the olfactometer study, a chi-square goodness of fit test used to test whether the ratio of beetles choosing the stimulus vs. the hexane control differed significantly from 1:1 (Minitab); beetles that did not select either the stimulus or the control (i.e., no choice) were excluded from the analysis. Finally, in the trapping study, numbers of male and female EAB captured among the three treatments were analyzed separately by fitting generalized linear mixed effect models, with block as a random factor, to the Poisson distribution (GLMER function, R Development Core Team 2013). Chi-square tests were used to determine if a significant proportion of the variation in capture of male and female EAB was attributable to treatment. Chi-square tests were considered significant at P = 0.05 or less and, if significant, the means separated using the Tukey's contrast option in the GLHT function (R Development Core Team 2013); raw data are presented as means ± standard error.

### References

BARTELT R, COSSE AA, ZILKOWSKI BW, FRASER I (2007) Antennally active macrolide from the emerald ash borer Agrilus planipennis emitted predominantly by females. J Chem Ecol 33: 1299-1302
BODEN CD, CHAMBERS J, STEVENS IDR (1993) A concise, efficient and flexible strategy for the synthesis of the pheromones of Oryzaephilus and Cryptolestes grain beetles. Synthesis 4: 411-420
CAPPAERT D, MCCULLOUGH DG, POLAND TM, SIEGERT NW (2005) Emerald ash borer in North America: a research and regulatory challenge. Am Entomol 51: 152-165
COOK SM, KHAN ZR, PICKETT JA (2007) The use of push-pull strategies in integrated pest management. Annu Rev Entomol 52: 375-400
CROOK DJ, MASTRO VC (2010) Chemical ecology of emerald ash borer Agrilus planipennis. J Chem Ecol 36: 101-112
CROOK DJ, KRIMIAN A, FRANCESE J, FRASER I, POLAND TM, SAWYER AJ, MASTRO, V (2008) Development of a host-based semiochemical lure for trapping emerald ash borer Agrilus planipennis (Coleoptera: Buprestidae). Envrion Entomol 37: 356-365
DE GROOT P, GRANT GG, POLAND TM, SCHARBACH R, BUCHAN L, NOTT RW, MACDONALD L, PITT D (2008) Electrophysiological response and attraction of emerald ash borer to green leaf volatiles (GLVs) emitted by host foliage. J Chem Ecol 34: 1170-1179
DICKENS JC, JANG EB, LIGHT DM, ALFORD AR (1990) Enhancement of insect pheromone responses by green leaf volatiles. Naturwissenschaften 77: 29-31
DOMINGUE MJ, BAKER TC (2012) A multi-disciplinary approach for developing tools to monitor invasive buprestid beetle species. In: Blanco JJ, Fernandes AT (eds) Invasive species: threats, ecological impact and control methods. Nova, Hauppauge, New York, pp. 77-100
EAB (2014) Emerald ash borer information website. http://www.emeraldashborer.info/faq.cfm Accessed May 2014
FÃRCASIU D, JAHME J, RÜCHARDT C (1985) Relative reactivity at bridgehead adamantyl and homoadamantyl substrates from solvolysis with heptafluorobutyrate as a highly reactive carbohydrate leaving group. Absence of SN2 character of solvolysis of tert-butyl derivatives. J Am Chem Soc 107: 5717-5722
FRANCESE JA, CROOK DJ, FRASER I, LANCE DA, A. J. SAWYER AJ, MASTRO VC (2010a) Optimization of trap color for the emerald ash borer, Agrilus planipennis (Coleoptera: Buprestidae). J Econ Entomol 103: 1235-1241
FRANCESE JA, MASTRO VC, OLIVER JB, LANCE DR, YOUSEFF N, LAVALEE SG (2005) Evaluation of colors for trapping Agrilus planipennis (Coleoptera: Buprestidae). J Entomol Sci 40: 93-95
GRANT GG, RYALL KL, LYONS DB, ABOU-ZAID MM (2010) Differential response of male and female emerald ash borers (Col., Buprestidae) to (Z)-3-hexenol and manuka oil. J Appl Entomol 34: 26-33
HAACK RA, JENDEK E, LUI H, MARCHANT KR, PETRICE T, POLAND TM, YE H (2002) The emerald ash borer: a new exotic pest in North America. Newsl Mich Entomol Soc 47: 1-5
LELITO JP, FRASER I, MASTRO V, TUMLINSON JH, BÖRÖCZKY K, BAKER TC (2007) Visually mediated 'paratrooper copulations' in the mating behaviour of Agrilus planipennis (Coleoptera: Buprestidae), a highly destructive invasive pest of North American ash trees. J Insect Behav 20: 537-552
LELITO JP, FRASER I MASTRO V, TUMLINSON JH, BAKER TC (2008) Novel visual-cue-based sticky traps for monitoring of emerald ash borers, Agrilus planipennis (Col., Buprestidae). J Appl Entomol 132: 668-674
LELITO JP, BÖRÖCZKY K, JONES TH, FRASER I, MASTRO VC, TUMLINSON JH , BAKER TC (2009) Behavioral evidence for a contact sex pheromone component of the emerald ash borer, Agrilus planipennis Fairmaire. J Chem Ecol 35: 104-110
LEMMEN J, EVENDEN M (2009) Peripheral and behavioral plasticity of pheromone response and its hormonal control in a long-lived moth. J Exp Biol 212: 2000-2006
MAGEE D I, MAYO P D, SILK P J, BEATTIE B (2013) Synthesis of (3E)-dodecen-12-olide, a potential pheromone component of the emerald ash borer. Synth Comm 43: 1368-1377
MAYO PD, SILK PJ, MAGEE DI, MCCONAGHY J (2014) Concise synthesis of (3Z)-dodecen-12-olide, pheromone component of the emerald ash borer. Synth Comm 44: 1957-1969
MCCULLOUGH DG, MERCADER RJ (2012) Evaluation of potential strategies to slow ash mortality (SLAM) caused by emerald ash borer (Agrilus planipennis): SLAM in an urban forest. Int Journal Pest Manage 58: 9-23
MINO T, MASUDA S, NISHIO M, YAMASHITA M (1997) Synthesis of lactones by Baeyer-Villiger oxidation with magnesium monoperphthalate hexahydrate. J Org Chem 62: 2633-2635
NEHME M, KEENA M, ZHANG A, BAKER T, XU Z, HOOVER K (2010) Field testing of Anoplophora glabripennis male-produced pheromone and plant volatiles. Environ Entomol 39: 169-176
R Development Core Team (2013) R: a language and environment for statistical computing. R Foundation for Statistical Computing, Vienna, Austria. ISBN 3-900051-07-0. Available from http://www.R-project.org (accessed 2014)
PURESWARAN DS, POLAND TM (2009) The role of olfactory cues in short-range mate finding by the emerald ash borer, Agrilus planipennis, Fairmaire (Coleoptera: Cerambycidae). J Insect Behav 22: 205-216
RODRIGUEZ-SAONA C, POLAND TM, MILLER JR, STELINSKI LL, GRANT GG, DE GROOT P, BUCHAN L, MACDONALD L (2006) Behavioural and electrophysiological responses of the emerald ash borer, Agrilus planipennis, to induced volatiles of Manchurian Ash, Fraxinus mandshurica. Chemoecology 16: 75-86
REINECKE A, RUTHER J, MAYER CJ, HILKER M (2006) Optimized trap lure for male Melolontha cockchafers. J Appl Entomol 130: 171-176
RUTHER J, REINECKE A, HILKER M (2002) Plant volatiles in the sexual communication of Melolontha hippocastani: response towards time-dependent bouquet and novel function of (Z)-3-hexen-1-ol as a sexual kairomone. Ecol Entomol 27: 76-83
RUTHER J, REINECKE A, THIEMANN K, TOLASCH T, FRANCKE W, HILKER M (2000) Mate finding in the forest cockchafer, Melolontha hippocastani, mediated by volatiles from plants and females. Physiol Entomol 25: 172-179
RYALL K, SILK PJ, MAYO PM, CROOK D, KRIMIAN, A. COSSE A, SWEENEY J, SCARR T (2012) Attraction of Agrilus planipennis Fairmaire (Coleoptera: Buprestidae) to a volatile pheromone: effects of release rate, host volatile and trap placement. Environ Entomol 41: 648-656
RYALL K, FIDGEN JG, SILK PJ, SCARR TA (2013) Efficacy of the pheromone (3Z)-lactone and the host kairomone (3Z)-hexenol at detecting early infestation of the emerald ash borer, Agrilus planipennis. Entomol Experimen Appl 147: 126-131
SIEGERT NW, MCCULLOUGH DG, LIEBHOLD AM, TELEWSKI FW (2014) Dendrochronological reconstruction of the epicentre and early spread of emerald ash borer in North America. Divers Distrib 20: 847-858
SILK PJ, RYALL K (2014) Semiochemistry and chemical ecology of the emerald ash borer Agrilus planipennis (Coleoptera: Buprestidae). Can Entomol doi:10.4039/tce.2014.58
SILK PJ, SWEENEY JD, WU J, PRICE J, GUTOWSKI J, KETTELA EG (2007) Evidence for a male-produced pheromone in Tetropium fuscum (F.) (Coleoptera: Cerambycidae). Naturwissenschaften 94: 697-701
SILK PJ, RYALL K, LYONS B, SWEENEY JD, WU J (2009) A contact sex pheromone component of the emerald ash borer Agrilus planipennis Fairmaire (Coleoptera: Buprestidae). Naturwissenschaften 96: 601-608
SILK PJ, RYALL K, MAYO P, LEMAY M, GRANT G, CROOK D, COSSE A, FRASER I, SWEENEY JD, LYONS DB, PITT D, SCARR T, MAGEE D (2011) Evidence for a volatile pheromone in Agrilus planipennis Fairmaire (Coleoptera: Buprestidae) that increases attraction to a host foliar volatile. Env Entomol 40: 904-916
SUGINOME H, YAMADA S (1985) Photoinduced transformations, 77. A four-step substitution of a carbonyl group of steroidal ketones by an oxygen atom. a new method for the synthesis of cyclic ethers. J Org Chem 50: 2489-2494
TABER D F, QIU J (2013) Permaleic acid: Baeyer-Villiger oxidation of cyclododecanone. J Chem Educ 90: 1103-1104
SWEENEY, J., DE GROOT, P., PRICE, J., & GUTOWSKI, J. M. (2006). Effect of semiochemical release rate, killing agent, and trap design on detection of Tetropium fuscum (F.) and other longhorn beetles (Coleoptera: Cerambycidae). Environmental Entomology, 35, 645-654.
VAN DER MEE L, HELMICH F, DE BRUIJN R, VEKEMANS JAJM, PALMANS ARA, MEIJER EW (2006) Investigation of lipase-catalysed ring-opening polymerization of lactones with various ring sizes. Kin Evaluat Macromol 39: 5021-5027
WERMUTH CG, GANELLIN CR, LINDBERG P, MITSCHER LA (1998) Glossary of terms used in medicinal chemistry (IUPAC Recommendations 1998). Pure Appl Chem 70 (5): 1129-1143
XU P, GARCZYNSK, SF, ATUNGULU E, SYED Z, CHOO Y-M, VIDAL DM, ZITELLI CH, LEAL, WS (2012) Moth sex pheromone receptors and deceitful parapheromones. PLOS One 7: 1-9

## Claims

1. A method of attracting a male Emerald Ash borer (EAB), the method comprising:
placing an attractant comprising dodecan-12-olide and a green leaf volatile in a canopy of an Ash tree, or in or near a non-host tree.

2. The method according to claim 1, wherein the green leaf volatile is (3Z)-hexenol, (2E)-hexenol, hexanal, (2E)-hexenal, (3Z)-hexenyl acetate, (2E)-hexenyl acetate, or any combination thereof.

3. The method according to claim 1 or 2, wherein the attractant comprises: a lure formulated to release dodecan-12-olide at a rate from 20 to 200 µg of dodecan-12-olide per day, and a vessel containing the green leaf volatile sized and shaped to release the green leaf volatile at a rate from 40 mg/day to 400 mg/day.

4. The method according to claim 1 or 2, wherein the attractant comprises a vessel containing a liquid mixture of the dodecan-12-olide and the green leaf volatile.

5. The method according to any one of claims 1-4, wherein the attractant includes dodecan-12-olide and green leaf volatile in sufficient amounts to result in a release of:
(a) 1 µg of dodecan-12-olide per 5 mg of the green leaf volatile released, to
(b) 1 µg of dodecan-12-olide per 0.1 mg of the green leaf volatile released.

6. The method according to any one of claims 1-5, wherein the attractant is associated with a trap positioned in the canopy of the Ash tree; or is placed in the canopy of the non-host tree.

7. The method according to any one of claims 1-6, wherein the Ash tree is treated with an insecticide.

8. The method according to any one of claims 1-7, further comprising:
placing a plurality of high release-rate lures or vessels that comprise dodecan-12-olide in the canopy of the Ash tree, or in the canopy of an Ash tree close to the non-host tree; wherein the high release-rate lures or vessels release the dodecan-12-olide at a rate of at least 0.5 mg/day.

9. The method according to any one of claims further comprising:
applying a composition comprising a masking agent to at least a portion of one or more Ash trees that lack the attractant, wherein the Ash trees that lack the attractant are infested with EABs, or are at risk of infestation with EABs.

10. The method according to claim 9, wherein the masking agent comprises α-pinene, β-pinene, 3-carene, limonene, α-terpinolene, or a combination thereof.

11. An attractant comprising:
dodecan-12-olide, and
a green leaf volatile;
wherein the attractant includes dodecan-12-olide and green leaf volatile in sufficient amounts to result in a release of:
(a) 1 µg of dodecan-12-olide per 5 mg of the green leaf volatile released, to
(b) 1 µg of dodecan-12-olide per 0.1 mg of the green leaf volatile released.

12. The attractant according to claim 11, wherein the green leaf volatile is: (3Z)-hexenol, (2E)-hexenol, hexanal, (2E)-hexenal, (3Z)-hexenyl acetate, (2E)-hexenyl acetate, or any combination thereof.

13. The attractant according to claim 11 or 12, wherein the attractant comprises: a lure formulated to release dodecan-12-olide at a rate from 20 to 200 µg of dodecan-12-olide per day, and a vessel containing the green leaf volatile sized and shaped to release the green leaf volatile at a rate from 40 mg/day to 400 mg/day.

14. The attractant according to claim 11 or 12, wherein the attractant comprises a vessel containing a liquid mixture of the dodecan-12-olide and the green leaf volatile.

15. The attractant according to any one of claims 11-14, wherein the attractant includes dodecan-12-olide and green leaf volatile in sufficient amounts to result in a release of:
(a') 1 µg of dodecan-12-olide per 2 mg of the green leaf volatile released, to (b') 1 µg of dodecan-12-olide per 0.25 mg of the green leaf volatile released.

## Patentansprüche

1. Verfahren zum Anlocken eines männlichen asiatischen Eschenprachtkäfers (EAB), wobei das Verfahren aufweist:
Platzieren eines Lockmittels, das Dodecan-12-Olid und einen Blattduftstoff aufweist, in einem Laubdach einer Esche oder in oder in der Nähe eines Nicht-Wirtsbaums.

2. Verfahren nach Anspruch 1, wobei der Blattduftstoff (3Z)-Hexenol, (2E)-Hexenol, Hexanal, (2E)-Hexenal, (3Z)-Hexenylacetat, (2E)-Hexenylacetat oder jede Kombination davon ist.

3. Verfahren nach Anspruch 1 oder 2, wobei das Lockmittel aufweist: einen Lockstoff, der formuliert ist, um Dodecan-12-Olid mit einer Rate von 20 bis 200 µg Dodecan-12-Olid pro Tag freizusetzen, und ein Gefäß, das den Blattduftstoff enthält, das bemessen und geformt ist, um den Blattduftstoff mit einer Rate von 40 mg/Tag bis 400 mg/Tag freizusetzen.

4. Verfahren nach Anspruch 1 oder 2, wobei das Lockmittel ein Gefäß aufweist, das eine flüssige Mischung von Dodecan-12-Olid und dem Blattduftstoff enthält.

5. Verfahren nach einem der Ansprüche 1 - 4, wobei das Lockmittel Dodecan-12-Olid und Blattduftstoff in ausreichenden Mengen enthält, um zu einer Freisetzung zu führen von:
(a) 1 µg Dodecan-12-Olid pro 5 mg des freigesetzten Blattduftstoffs, bis
(b) 1 µg Dodecan-12-Olid pro 0,1 mg des freigesetzten Blattduftstoffs.

6. Verfahren nach einem der Ansprüche 1-5, wobei das Lockmittel mit einer Falle verbunden ist, die in dem Laubdach der Esche positioniert ist oder in dem Laubdach des Nicht-Wirtsbaums platziert ist.

7. Verfahren nach einem der Ansprüche 1 - 6, wobei die Esche mit einem Insektenvernichtungsmittel behandelt wird.

8. Verfahren nach einem der Ansprüche 1 -7, das ferner aufweist:
Platzieren einer Vielzahl von Lockstoffen oder Gefäßen mit hoher Freisetzungsrate, die Dodecan-12-Olid aufweisen, in dem Blätterdach der Esche oder in dem Blätterdach einer Esche nahe dem Nicht-Wirtsbaum; wobei die Lockstoffe oder Gefäße mit hoher Freisetzungsrate das Dodecan-12-Olid mit einer Rate von mindestens 0,5 mg/Tag freisetzen.

9. Verfahren nach einem der Ansprüche das ferner aufweist:
Aufbringen einer Zusammensetzung, die ein Maskierungsmittel aufweist, auf mindestens einen Abschnitt einer oder mehrerer Eschen, denen das Lockmittel fehlt, wobei die Eschen, denen das Lockmittel fehlt von EABs befallen sind oder gefährdet sind, von EABs befallen zu werden.

10. Verfahren nach Anspruch 9, wobei das Maskierungsmittel α-Pinen, β-Pinen, 3-Caren, Limonen, α-Terpinolen oder eine Kombination davon aufweist.

11. Lockmittel, das aufweist:
Dodecan-12-Olid, und
einen Blattduftstoff;
wobei das Lockmittel Dodecan-12-Olid und Blattduftstoff in ausreichenden Mengen enthält, um zu einer Freisetzung zu führen von:
(a) 1 µg Dodecan-12-Olid pro 5 mg des freigesetzten Blattduftstoffs, bis
(b) 1 µg Dodecan-12-Olid pro 0,1 mg des freigesetzten Blattduftstoffs.

12. Lockmittel nach Anspruch 11, wobei der Blattduftstoff ist: (3Z)-Hexenol, (2E)-Hexenol, Hexanal, (2E)-Hexenal, (3Z)-Hexenylacetat, (2E)-Hexenylacetat oder jede Kombination davon.

13. Lockmittel nach Anspruch 11 oder 12, wobei das Lockmittel aufweist: einen Lockstoff, der formuliert ist, um Dodecan-12-Olid mit einer Rate von 20 bis 200 µg Dodecan-12-Olid pro Tag freizusetzen, und ein Gefäß, das den Blattduftstoff enthält, das bemessen und geformt ist, um den Blattduftstoff mit einer Rate von 40 mg/Tag bis 400 mg/Tag freizusetzen.

14. Lockmittel nach Anspruch 11 oder 12, wobei das Lockmittel ein Gefäß aufweist, das eine flüssige Mischung von Dodecan-12-Olid und dem Blattduftstoff enthält.

15. Lockmittel nach einem der Ansprüche 11 - 14, wobei das Lockmittel Dodecan-12-Olid und Blattduftstoff in ausreichenden Mengen enthält, um zu einer Freisetzung zu führen von:
(a') 1 µg Dodecan-12-Olid pro 2 mg des freigesetzten Blattduftstoffs, bis (b') 1 µg Dodecan-12-Olid pro 0,25 mg freigesetztem Blattduftstoff.

## Revendications

1. Procédé d'attraction d'un agrile du frêne (EAB) mâle, le procédé comprenant :
le placement d'un attractif comprenant du dodécan-12-olide et une substance volatile des feuilles dans la canopée d'un frêne, ou dans ou à proximité d'un arbre non hôte.

2. Procédé selon la revendication 1, dans lequel la substance volatile des feuilles est le (3Z)-hexénol, le (2E)-hexénol, l'hexanal, le (2E)-hexanal, l'acétate de (3Z)-hexényle, l'acétate de (2E)-hexényle, ou une combinaison quelconque de ceux-ci.

3. Procédé selon la revendication 1 ou 2, dans lequel l'attractif comprend : un leurre formulé pour libérer du dodécan-12-olide selon un taux allant de 20 à 200 µg de dodécan-12-olide par jour, et un récipient contenant la substance volatile des feuilles d'une taille et d'une forme conçues pour libérer la substance volatile des feuilles selon un taux allant de 40 mg/jour à 400 mg/jour.

4. Procédé selon la revendication 1 ou 2, dans lequel l'attractif comprend un récipient contenant un mélange liquide du dodécan-12-olide et de la substance volatile des feuilles.

5. Procédé selon l'une quelconque des revendications 1 à 4, dans lequel l'attractif comporte du dodécan-12-olide et de la substance volatile des feuilles selon des quantités suffisantes pour entraîner la libération :
(a) de 1 µg de dodécan-12-olide pour 5 mg de substance volatile des feuilles libérée, à
(b) 1 µg de dodécan-12-olide pour 0,1 mg de substance volatile des feuilles libérée.

6. Procédé selon l'une quelconque des revendications 1 à 5, dans lequel l'attractif est associé à un piège positionné dans la canopée du frêne ; ou est placé dans la canopée de l'arbre non hôte.

7. Procédé selon l'une quelconque des revendications 1 à 6, dans lequel le frêne est traité par un insecticide.

8. Procédé selon l'une quelconque des revendications 1 à 7, comprenant en outre :
le placement d'une pluralité de leurres ou de récipients à taux élevé de libération, comprenant du dodécan-12-olide, dans la canopée du frêne, ou dans la canopée d'un frêne proche de l'arbre non hôte ; où les leurres ou récipients à taux élevé de libération libèrent le dodécan-12-olide selon un taux d'au moins 0,5 mg/jour.

9. Procédé selon l'une quelconque des revendications 1 à 7, comprenant en outre :
l'application d'une composition comprenant un agent de masquage à au moins une portion d'un ou plusieurs frênes qui sont dépourvus d'attractif, où les frênes qui sont dépourvus d'attractif sont infestés par des EAB, ou risquent d'être infestés par des EAB.

10. Procédé selon la revendication 9, dans lequel l'agent de masquage comprend de l'α-pinène, du β-pinène, du 3-carène, du limonène, de l'α-terpinolène, ou une combinaison de ceux-ci.

11. Attractif, comprenant :
du dodécan-12-olide ; et
une substance volatile des feuilles ;
où l'attractif comporte du dodécan-12-olide et de la substance volatile des feuilles selon des quantités suffisantes pour entraîner la libération :
(a) de 1 µg de dodécan-12-olide pour 5 mg de substance volatile des feuilles libérée, à
(b) 1 µg de dodécan-12-olide pour 0,1 mg de substance volatile des feuilles libérée.

12. Attractif selon la revendication 11, dans lequel la substance volatile des feuilles est le (3Z)-hexénol, le (2E)-hexénol, l'hexanal, le (2E)-hexanal, l'acétate de (3Z)-hexényle, l'acétate de (2E)-hexényle, ou une combinaison quelconque de ceux-ci.

13. Attractif selon la revendication 11 ou 12, où l'attractif comprend : un leurre formulé pour libérer du dodécan-12-olide selon un taux allant de 20 à 200 µg de dodécan-12-olide par jour, et un récipient contenant la substance volatile des feuilles d'une taille et d'une forme conçues pour libérer la substance volatile des feuilles selon un taux allant de 40 mg/jour à 400 mg/jour.

14. Attractif selon la revendication 11 ou 12, où l'attractif comprend un récipient contenant un mélange liquide du dodécan-12-olide et de la substance volatile des feuilles.

15. Attractif selon l'une quelconque des revendications 11 à 14, où l'attractif comporte du dodécan-12-olide et de la substance volatile des feuilles selon des quantités suffisantes pour entraîner la libération :
(a') de 1 µg de dodécan-12-olide pour 2 mg de substance volatile des feuilles libérée, à
(b') 1 µg de dodécan-12-olide pour 0,25 mg de substance volatile des feuilles libérée.
